(19) Europäisches Patentamt
European Patent Office
Office européen des brevets

(11) **EP 3 285 096 B1**

(12) **EUROPEAN PATENT SPECIFICATION**

(45) Date of publication and mention
of the grant of the patent:
**26.02.2025 Bulletin 2025/09**

(21) Application number: **15889052.5**

(22) Date of filing: **09.12.2015**

(51) International Patent Classification (IPC):
*G02B 3/00* (2006.01)    *B42D 25/342* (2014.01)
*B42D 25/324* (2014.01)    *B42D 25/351* (2014.01)
*B42D 25/36* (2014.01)    *B42D 25/373* (2014.01)

(52) Cooperative Patent Classification (CPC):
**B42D 25/342; G02B 3/0062; B42D 25/324;
B42D 25/351; B42D 25/36; B42D 25/373**

(86) International application number:
**PCT/CN2015/096764**

(87) International publication number:
**WO 2016/165356 (20.10.2016 Gazette 2016/42)**

(54) **MICRO-OPTICAL DEVICE FOR DOUBLE-SIDED IMAGING, PREPARATION METHOD THEREFOR AND APPLICATION THEREOF**

**MIKROOPTISCHE VORRICHTUNG FÜR DOPPELSEITIGE BILDGEBUNG, HERSTELLUNGSVERFAHREN DAFÜR UND ANWENDUNG DAVON**

**DISPOSITIF MICRO-OPTIQUE DE FORMATION D'IMAGE RECTO-VERSO, PROCÉDÉ DE PRÉPARATION S'Y RAPPORTANT ET APPLICATION S'Y RAPPORTANT**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.04.2015   CN 201510181774**

(43) Date of publication of application:
**21.02.2018   Bulletin 2018/08**

(73) Proprietor: **Shanghai Techsun Packing Materials
Co. Ltd.
Shanghai 201619 (CN)**

(72) Inventors:
• **XU, Liangheng
  Shanghai 201619 (CN)**
• **ZHUANG, Xiaolei
  Shanghai 201619 (CN)**
• **DONG, Lanxin
  Shanghai 201619 (CN)**
• **YOU, Renshun
  Shanghai 201619 (CN)**

(74) Representative: **Ipsilon
Le Centralis
63, avenue du Général Leclerc
92340 Bourg-la-Reine (FR)**

(56) References cited:
CN-A- 101 120 139    CN-A- 103 625 154
CN-A- 103 625 154    CN-A- 104 834 029
KR-A- 20010 003 498    US-A- 5 712 731
US-A1- 2005 180 020    US-A1- 2012 098 249
US-B1- 6 171 883

EP 3 285 096 B1

## Description

### Technical Field

The present invention relates to a micro-optical device.

### Background

The Moire amplification technology based on microlens and micrographic arrays has been widely concerned in anti-counterfeiting field. Drinkwater et al., put forward the use of a security device that combines a microlens array having a pore size of 50-250 μm and a micrographic array in U.S. Patent No. 5712731.

In U.S. Patent No. 2005/0180020A1, R. A. Steenblik et al., expand the scope of the security device based on the microlens array, i.e. reducing the pore size of the microlens to be less than 50 μm, by means of more precise processing techniques and more transformations.

The foresaid micro-optical device using the microlens structure is for unidirectional imaging, and one can only see the stereoscopic sloshing image from one side, so it has limitations no matter whether being used for packaging materials or for anti-counterfeiting of bills.

Document US 2012/098249 A1 discloses a security element, a security system and production methods thereof.

### Summary of the Invention

The object of the present invention is to disclose a micro-optical device for double-sided imaging, a preparation method therefor and an application thereof, in order to overcome the defects existing in the prior art.

The micro-optical device for double-sided imaging is according to claim 1.

The beneficial effect of the present invention is that the produced micro-optical device can image on two faces; after the products prepared by adopting the device are used for packaging and anti-counterfeiting of bills, stereoscopic images can be represented on front sides and back sides; and the representation forms of the two stereoscopic images are different, thereby greatly enhancing attraction and anti-copying capability of the products.

### Description of the Drawings

FIG. 1 is a structural schematic diagram of a micro-optical device for double-sided imaging.

FIG. 2 is a schematic diagram of the transmission focusing of a first microlens and a schematic diagram of the reflection focusing of a second microlens.

FIG. 3 is a structural schematic diagram of a functional layer.

FIG. 4 is a schematic diagram of the first microlens, the second microlens, and the miniature graphic in a periodic arrangement.

FIG. 5 is a schematic diagram of the inclined angle between the symmetrical axes of two layers in the periodic arrangement.

FIG. 6 is a schematic diagram of the first microlens, the second microlens, and the miniature graphic in a random arrangement.

FIG. 7 is a schematic diagram of the preparation of the miniature graphic.

FIG. 8 is a schematic diagram of a miniature graphic as a micro-structure.

FIG. 9 is a schematic diagram of a bill having double-sided window security lines that utilizes the micro-optical device of the present invention.

FIG. 10 is a sectional schematic diagram of a bill.

FIG. 11 is a structural schematic diagram of an invisible ciphertext.

FIG. 12 is a structural schematic diagram of a micro-optical device for double-sided imaging combined with holography.

FIG. 13 is a structural schematic diagram of another micro-optical device for double-sided imaging combined with holography.

### Detailed Description of the Embodiments

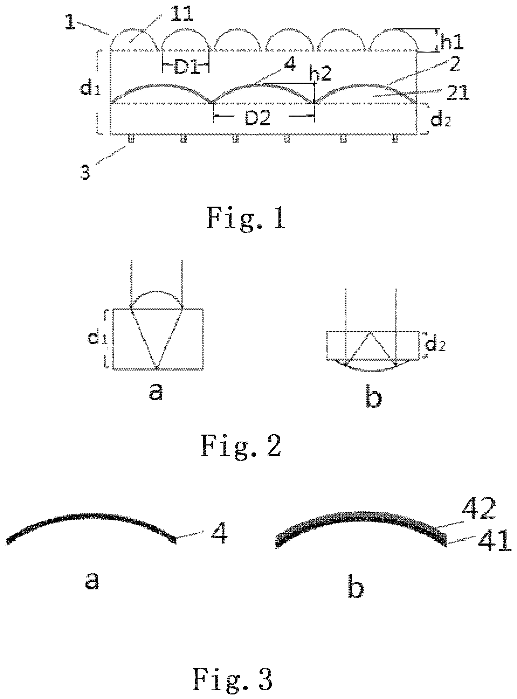

Referring to FIG. 1, the micro-optical device for double-sided imaging comprises a first microlens layer 1, a functional layer 4, a second microlens layer 2 and a miniature graphic layer 3 which are mutually compounded in sequence;

the first microlens layer 1 is a first microlens array formed by arranging a plurality of first microlenses 11;

the second microlens layer 2 is a second microlens array formed by arranging a plurality of second microlenses 21;

the functional layer is arranged on the surface of the second microlens layer, and a material for the functional layer has a refractive index different from that of a surrounding material.

Preferably, the first microlens layer 1 is a first microlens array formed by arranging the first microlens 11 in a periodic arrangement or a random arrangement, and the second microlens layer 2 is a second microlens array formed by arranging the plurality of second microlens 21 in a periodic arrangement or a random arrangement.

The substrate of the first microlens layer 1 has a refractive index of 1.4~1.8.

The substrate of the first microlens layer 1 is selected from hot-compressible materials such as polyvinyl acetate, cellulose triacetate, polymethyl methacrylate, polystyrene, a mixture of alkyd resin and toluene diisocyanate, polyurethane, polypropylene, polyethylene-1,4-cyclohexane dimethylene terephthalate, and may be also selected from UV-curable materials such as epoxy acrylates, fatty acid-modified epoxy acrylates, and a mixture of styrene and epoxy acrylates.

The substrate of the second microlens layer 2 has a refractive index of 1.4~1.8.

The substrate of the second microlens layer 2 is selected from hot-compressible materials such as polyvinyl acetate, cellulose triacetate, polymethyl methacrylate, polystyrene, a mixture of alkyd resin and toluene diisocyanate, polyurethane, polypropylene, polyethylene-1,4-cyclohexane dimethylene terephthalate, and may be also selected from UV-curable materials such as epoxy acrylates, fatty acid-modified epoxy acrylates, and a mixture of styrene and epoxy acrylates.

The first microlens 11 or the second microlens 21 is a spherical lens or an aspherical lens.

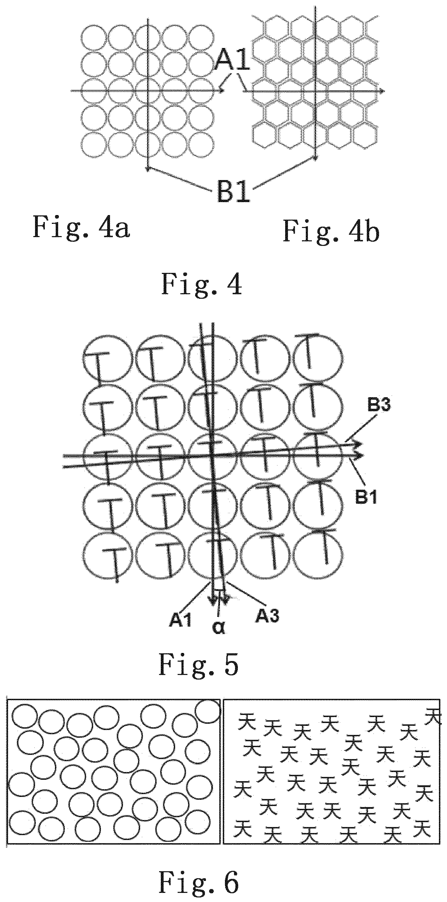

The geometry of the base of the first microlens or the second microlens is one of circle, triangular, rectangular or regular hexagon, or a combination thereof. Regular hexagon is preferable, because the microlens having a regular hexagonal base has the highest filling rate under the same lens pore size and the same lens spacing; the higher the filling rate of the microlens, the clearer and brighter the obtained macroscopically magnified graphic information. Referring to FIG. 4, FIG. 4a illustrates a schematic diagram of the circular base microlens of the first microlens 11 and the second microlens 21 in a rectangular arrangement, and FIG. 4b illustrates a schematic diagram of the regular hexagonal base microlens of the first microlens 11 and the second microlens 21 in a honeycomb arrangement.

The filling rate refers to the ratio of the area occupied by the microlens to the total area. The ratio of the total area of the first microlens 11 to the total area of the first microlens layer 1 is in a range of from 40 % to 90 %, and the ratio of the total area of the second microlens 21 to the total area of the second microlens layer 2 is in a range of from 40 % to 90 %.

The material for the functional layer has a great transmittance to visible light and has a refractive index different from that of the surrounding material, which corresponds to a layer of refractive index difference array with a micro-arc shaped structure formed within the material. The functional layer 4 has a thickness of 10~1000 nm, preferably 10~100 nm.

Preferably, as shown in FIG. 3, the layer number of the functional layer 4 is 1 or more, preferably 1 to 3; the multilayered functional layer has a stronger ability to fully reflect light than the monolayer film structure.

FIG. 3a illustrates the monolayer film structure of the functional layer. The material for the functional layer 4 has a refractive index greater than that of the surrounding material. This structure can only create a full reflection between the functional layer 4 and the surrounding material.

FIG. 3b illustrates the double-layer film structure of the functional layer. The first functional film layer 41 is compounded on the surface of the second microlens layer 1, and the second functional film layer 42 is compounded on the surface of the first functional film layer 41.

The refractive index of the first functional film layer 41 is greater than that of the second functional film layer 42. The difference between the refractive index of the first functional film layer 41 and the refractive index of the second functional film layer 42 is preferably 0.3~0.8. The second functional film layer 42 has a refractive index greater than that of the surrounding material. Such a structure may create two full reflections between the first functional film layer 41 and the second functional film layer 42 and between the second functional film layer 42 and the surrounding material, and thereby has a stronger ability to fully reflect light than the monolayer film structure. In theory, the more the layer number of said film, the stronger its ability to fully reflect light.

The micro-optical device has a high transmittance to the light incident from the first microlens layer, but for the light incident from the miniature graphic layer, only a part of the light can pass through and a part of the light will be reflected back by the effect of full reflection, due to the presence of the arc-shaped refractive index difference.

The material for the functional layer 4 preferably has a refractive index of 1.6-3.5. The difference between the refractive index of the material for the functional layer 4 and the refractive index of the surrounding material is 0.3~2.0, preferably 0.5~1.5. The functional layer 4 is located on the surface of the second microlens and has a filling rate same as that of the second microlens layer.

The material for the functional layer 4 is selected from the group consisting of an oxide, a nitride, a carbide, an inorganic metal salt, a metal or a metal alloy.

The oxide is selected from the group consisting of silicon monoxide SiO, silica $SiO_2$, titania $TiO_2$, zirconium dioxide $ZrO_2$, hafnium oxide $HfO_2$, titanium monoxide TiO, trititanium pentoxide $Ti_3O_5$, niobium pentoxide $Nb_2O_5$, tantalum pentoxide $Ta_2O_5$, yttrium oxide $Y_2O_3$ or zinc oxide ZnO.

The nitride is selected from the group consisting of titanium nitride TiN, silicon nitride $Si_3N_4$ or boron nitride BN.

The carbide is selected from the group consisting of silicon carbide SiC or boron carbide $B_4C$.

The inorganic metal salt is selected from the group consisting of neodymium fluoride $NdF_3$, barium fluoride $BaF_2$, cerium fluoride $CeF_3$, magnesium fluoride $MgF_2$, lanthanum fluoride $LaF_3$, yttrium fluoride $YF_3$, ytterbium fluoride $YbF_3$, erbium fluoride $ErF_3$, zinc selenide ZnSe, zinc sulfide ZnS, lanthanum titanate $LaTiO_3$, barium titanate $BaTiO_3$, strontium titanate $SrTiO_3$, praseodymium titanate $PrTiO_3$ or cadmium sulfide CdS.

The metal is selected from the group consisting of Al, Cu, Ti, Si, Au, Ag, In, Mg, Zn, Pt, Ge and Ni.

The metal alloy is selected from the group consisting of gold germanium alloy AuGe, gold nickel alloy AuNi, nickel chromium alloy NiCr, titanium aluminum alloy TiAl, copper indium gallium alloy CuInGa, copper indium gallium selenium alloy CuInGaSe, zinc aluminum alloy ZnAl or aluminum silicon alloy AlSi.

The miniature graphic layer 3 is a miniature graphic array arranged in a periodic arrangement or a random arrangement. The material for the miniature graphic layer 3 is selected from hot-compressible materials such as polyvinyl acetate, cellulose triacetate, polymethyl methacrylate, polystyrene, a mixture of alkyd resin and toluene diisocyanate, polyurethane, polypropylene, polyethylene-1,4-cyclohexane dimethylene terephthalate, and may be also selected from UV-curable materials such as epoxy acrylates, fatty acid-modified epoxy acrylates, and a mixture of styrene and epoxy acrylates, having a thickness of 0.5~5 microns.

The miniature graphic is a pattern or a character of micron magnitude in size. The miniature graphic has one or more of transparency, color, reflection, interference, dispersion or polarization characteristics, as long as the graphic part and the other parts can produce a contrast. Since the miniature graphic has a small size and the general printing equipment cannot print such a fine graphic structure, the method of printing a miniature graphic as disclosed in the applicant's Chinese patent No. 201110074244.0 may be used for the preparation.

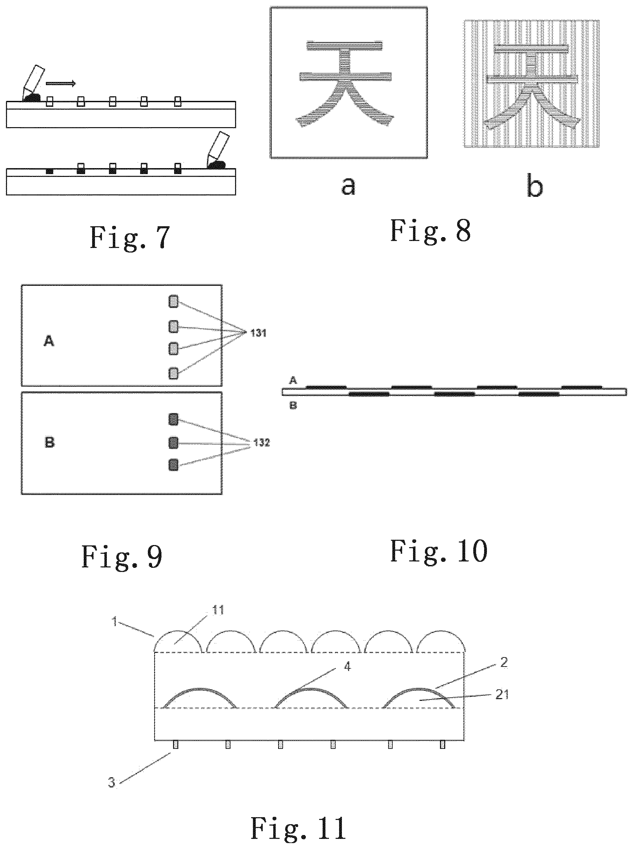

Referring to FIG. 7 and FIG. 8, FIG. 7 is a schematic diagram of making the miniature graphic by scraping ink. FIG. 8a is a representation of the miniature graphic "天" that is embodied by forming a contrast between the grating structure in the strokes of the miniature graphic "天" and the surrounding, because the grating has different optical characteristics.

FIG. 8b is a representation of the miniature graphic "天" that is formed by creating a contrast between the grating structure in the strokes of the miniature graphic "天" and the grating structures of another orientation in the other parts, because the grating structures of different orientations will produce a contrast.

The miniature graphic layer 3 is located near the transmission focal plane of the first microlens layer 1 and also near the reflection focal plane of the second microlens layer 2.

Referring to FIG. 2, FIG. 2a is a schematic diagram of the transmission focusing of the first microlens 11. The distance $d_1$ between the first microlens layer 1 and the miniature graphic layer 3 and the structural parameters of the first microlens 11 satisfy the following relationship:

$$d_1 = \frac{D_1^2 + 4h_1^2}{8h_1(n_1 - 1)}$$

$$(1)$$

wherein:

$D_1$ is a pore size of the first microlens 11, and preferably the pore size $D_1$ of the first microlens 11 is 20~500 $\mu$m;

$h_1$ is a spherical cap height of the first microlens 11, and preferably the spherical cap height of the first microlens 11 is 6~100 $\mu$m;

$n_1$ is a refractive index of the material for the first microlens 11, and preferably the refractive index of the material for the first microlens 11 is 1.4~1.8;

an arc-shaped functional layer 4 having a high refractive index is located between the first microlens layer 1 and the miniature graphic layer 3, which has certain impact on the propagation of light. However, the functional layer 4 has a thickness of only tens of nanometers, so the impact on the light propagation is negligible and can be ignored.

FIG. 2b is a schematic diagram of the reflection focusing of the second microlens 21.

The distance $d_2$ between the second microlens layer 2 and the miniature graphic layer 3 and the structural parameters of the second microlens 21 satisfy the following relationship:

$$d_2 = \frac{D_2{}^2 - 12h_2{}^2}{16h_2}$$

$$(2)$$

wherein:

$D_2$ is a pore size of the second microlens 21, and preferably the pore size of the second microlens 21 is 20~1000 $\mu$m; $h_2$ is a spherical cap height of the second microlens 21, and preferably the spherical cap height of the second microlens 21 is 2~100 $\mu$m.

In the above structure, when an observer observes from the side of the first microlens layer, the functional layer 4 is transparent for the imaging of the first microlens (the effect is little and can be ignored). The first microlens layer and the miniature graphic layer satisfy the Moire amplification condition and produce a first visual effect which, for example, is stereoscopic and sloshing. When the observer observes from the side of the miniature graphic layer, the functional layer 4 is likewise transparent for both the first microlens layer and the miniature graphic layer. However, under such a circumstance, the locations of the miniature graphic layer and the first microlens layer 1 are inverted, which do not satisfy the Moire amplification condition and will not generate obvious visual effect. But, because of the presence of the micro-arc shaped refractive index difference array, the light incident from the miniature graphic layer will be partly reflected back fully, which corresponds to that the miniature graphic layer 3 is reflected for imaging by the second microlens layer 2. Then, the miniature graphic layer and the second microlens layer satisfy the Moire amplification condition and produce a second visual effect which, for example, is stereoscopic and sloshing. The brightness of the second visual effect is affected by the ambient light intensity and the refractive index difference of the functional layer. The stronger the ambient light intensity, the more the light of full reflection, and the more obvious the second visual effect. The greater the refractive index difference of the functional layer, the stronger its ability to fully reflect the light, and the more obvious the second visual effect.

Referring to FIG. 4, when the first microlens array, the second microlens array and the miniature graphic array are in a periodic arrangement, the first microlenses of the first microlens layer 1, the second microlenses of the second microlens layer 2 and the miniature graphics of the miniature graphic layer 3 are all in a periodic arrangement. There are two mutually perpendicular symmetrical axes A1 and B1 in the plane. A1 is the symmetry axis of the array in the X-axis direction, while B1 is the symmetry axis of the array in the Y-axis direction. For the three-layer structure, each layer is symmetrical in the X and Y axes. The respective units in each layer have a fixed arrangement period along the direction of the symmetrical axes. The parameters of the first microlens layer 1 and the miniature graphic layer 3 satisfy the following relationship:

$$m_1 = \frac{N_1 T_1}{\sqrt{(T_3 \cos\alpha_1 - N_1 T_1)^2 + (T_3 \sin\alpha_1)^2}}$$

$$(3)$$

wherein:

$m_1$ a the macroscopic magnification of the first visual effect, $T_1$ is the arrangement period of the first microlens array layer, $T_3$ is the arrangement period of the miniature graphic array, $\alpha_1$ is an inclined angle between the symmetrical axis of the first microlens array and the symmetrical axis of the miniature graphic array. As shown in FIG. 5, A1 and B1 are symmetrical axes of the first microlens array, A3 and B3 are symmetrical axes of the miniature graphic array in FIG. 5; $N_1$ is a coefficient, $N_1$=0.1~10; $T_1$=20~500 $\mu$m, $T_3$=20~500 $\mu$m, $\alpha_1$=0~5° ; the term "macroscopic magnification of the first visual effect" refers to a ratio of the size of the macroscopic miniature graphic seen from the side of the first microlens layer by eyes to the actual size of the miniature graphic; the parameters of the second microlens layer 2 and the miniature graphic layer 3 satisfy the following relationship:

$$m_2 = \frac{N_2 T_2}{\sqrt{\left(T_3 \cos\alpha_2 - N_2 T_2\right)^2 + \left(T_3 \sin\alpha_2\right)^2}}$$

$$(4)$$

wherein:

$m_2$ a the macroscopic magnification of the second visual effect, $T_2$ is the arrangement period of the second microlens array, $T_3$ is the arrangement period of the miniature graphic array, $\alpha_2$ is an inclined angle between the symmetrical axis of the second microlens array and the symmetrical axis of the miniature graphic array;
$N_2$ is a coefficient, $N_2 = 0.1 \sim 10$;
$T_2 = 20 \sim 1000\ \mu m$, $T_3$ is same as defined in formula (3);

$$\alpha_2 = 0 \sim 5^\circ\ \ ;$$

the term "macroscopic magnification of the second visual effect" refers to a ratio of the size of the macroscopic miniature graphics seen from the side of the miniature graphic layer by eyes to the actual size of the miniature graphics.

Referring to FIG. 5, it is the schematic diagram of the first microlens layer 1, the second microlens layer 2 and the miniature graphic layer 3 in a random arrangement, wherein the respective units are randomly distributed and there is no symmetrical axis in the plane. The superposition of two layers of random dot arrays with the same distribution but very small differences in size and angle will generate another Moire fringe, i.e. "Glass Pattern" phenomenon. The Moire fringe generated by the dot arrays in a periodic arrangement is also in the periodic arrangement and may always extend over the entire plane. However, the Glass Pattern phenomenon will only generate a single Moire fringe at a central point of the entire plane. When the microlens layer of a randomly distribution is superimposed with the miniature graphic layer of a randomly distribution, the same stereoscopic sloshing effect as the periodic arrangement can also be produced by the Glass Pattern principle and the lens imaging effect. The difference is that the periodic arrangement produces the stereoscopic sloshing effect of periodic macroscopic graphics and the random distribution arrangement produces the stereoscopic sloshing effect of a single macroscopic graphic.

The periodic distribution arrays and the random distribution arrays both follow the basic principle of Moire fringes. Therefore, the relevant theoretical formulae, formula (1) and formula (2), for the Moire amplification in a periodic distribution, as mentioned above are likewise applicable to the random distribution. By reasonably selecting the size ratio and the rotational angle of two layers of random distribution arrays, a naked-eye-stereoscopic and orthogonally sloshing visual effect will be also produced.

The preparation method of the present invention comprises the steps of:

(1) Determining the structural parameters $D_1$ and $h_1$ of the first microlens, and the structural parameters $D_2$ and $h_2$ of the second microlens to calculate the distance $d_1$ between the first microlens layer 1 and the miniature graphic layer 3 and the distance $d_2$ between the second microlens layer 2 and the miniature graphic layer 3.
(2) Preparing the second microlens layer 2 on the substrate film of the second microlens layer, the substrate film having a thickness of $d_2$, by a UV molding process, and then performing vacuum coating on the surface of the second microlens layer using the functional layer material to obtain the second microlens layer coated with said functional layer, wherein the coating has a thickness of 10~1000 nm.
Preferably, the functional layer materials having different refractive indexes are adopted for coating for many times, preferably for 1-3 times.
(3) Coating the substrate layer of the first microlens layer on the other side of the functional layer so that the overall thickness of the film is $d_1$, the overall thickness of the film refers to the total thickness of the second microlens substrate, the second microlens layer, the functional layer and the substrate of the first microlens layer, wherein the substrate of the first microlens layer is selected from hot-compressible materials such as polyvinyl acetate, cellulose triacetate, polymethyl methacrylate, polystyrene, a mixture of alkyd resin and toluene diisocyanate, polyurethane, polypropylene, polyethylene-1,4-cyclohexane dimethylene terephthalate, and may be also selected from UV-curable materials such as epoxy acrylates, fatty acid-modified epoxy acrylates, and a mixture of styrene and epoxy acrylates; and then preparing the first microlens layer 1 on the first microlens substrate, preferably by a UV molding process, wherein the UV molding process is a conventional method, see the method reported in the following reference: C. Y. Chang, S. Y. Yang, M. H. Chu, "Rapid fabrication of ultraviolet-cured polymer microlens arrays by soft roller stamping process" [J]. Micromech. Microeng. 84(2007)355-361.

(4) Preparing the miniature graphic layer 3 on the other side of the substrate of the second microlens layer, preferably by the method of printing a miniature graphic as disclosed in the applicant's Chinese Patent No. 201110074244.0, so as to obtain the micro-optical device for double-sided imaging.

The micro-optical device for double-sided imaging of the present invention may be used for preparing the security line of bills.

FIG. 9 is a schematic diagram of a bill having double-sided window security lines that utilizes the micro-optical device of the present invention. The micro-optical device of the present invention is partially exposed on both A and B sides of the bill. FIG. 10 is a sectional schematic diagram of a bill.

The first visual effect of the micro-optical device of the present invention can be seen by observing the security line from the A-side window 131, and the second visual effect of the micro-optical device of the present invention can be seen by observing the security line from the B-side window 132, which greatly enhances the anti-counterfeiting characteristic of the security line.

Example 1

Preparing the micro-optical device for double-sided imaging having the structures shown in FIG. 1 and FIG. 4.

The pore size $D_1$ of the first microlens 11 is 30 microns, the spherical cap height $h_1$ is 6 $\mu$m; the pore size $D_2$ of the second microlens 21 is 60 $\mu$m, the spherical cap height $h_2$ is 10 $\mu$m; $\alpha_1$=0.3°, $\alpha_2$=0;

The geometry of the base of the first microlens 11 and the second microlens 21 is a regular hexagon;

The first microlens 11, the second microlens 21 and the miniature graphic are in a periodic arrangement;

Both the first microlens 11 and the second microlens 21 are spherical lenses.

The filling rate of the first microlens 1 is 80%;

The filling rate of the second microlens layer 2 is 79%;

The functional layer is a 65 nm thick zinc sulfide coating with a refractive index of 2.35;

The miniature graphic layer 3 is located near the transmission focal plane of the first microlens layer 1, the distance $d_1$ between the first microlens layer 1 and the miniature graphic layer 3 and the structural parameters of the first microlens 11 satisfy the following relationship:

$$d_1 = \frac{D_1^{\,2} + 4h_1^{\,2}}{8h_1(n_1 - 1)}$$

$$(1)$$

wherein:

the parameters of the first microlens are substituted into the above formula to obtain the distance $d_1$ between the first microlens layer 1 and the miniature graphic layer, $d_1$ = 43.5 $\mu$m.

The miniature graphic layer 3 is also located near the reflection focal plane of the second microlens 21. The distance $d2$ between the second microlens 2 and the miniature graphic layer 3 and the structural parameters of the second microlens 21 satisfy the following relationship:

$$d_2 = \frac{D_2^{\,2} - 12h_2^{\,2}}{16h_2}$$

$$(2)$$

wherein:

the parameters of the second microlens are substituted into the formula to obtain the distance $d_2$ between the second microlens layer and the miniature graphic layer, $d_2$=15 $\mu$m.

The parameters of the first microlens layer 1 and the miniature graphic layer 3 satisfy the following relationship:

$$m_1 = \frac{N_1 T_1}{\sqrt{\left(T_3 \cos \alpha_1 - N_1 T_1\right)^2 + \left(T_3 \sin \alpha_1\right)^2}}$$

$$(3)$$

wherein:

$T_1$ is the arrangement period of the first microlens array layer, which is 32 $\mu$m;
$T_3$ is the arrangement period of the miniature graphic array, which is 32 $\mu$m;
$\alpha_1$ is the inclined angle between the symmetrical axis of the first microlens array and the symmetrical axis of the miniature graphic array, which is 0.3° ;

$$N_1 = 1.$$

The parameters of the second microlens layer 2 and the miniature graphic layer 3 satisfy the following relationship:

$$m_2 = \frac{N_2 T_2}{\sqrt{\left(T_3 \cos \alpha_2 - N_2 T_2\right)^2 + \left(T_3 \sin \alpha_2\right)^2}}$$

$$(4)$$

wherein:

$T_2$ is the arrangement period of the second microlens array, which is 64.32 $\mu$m;
$T_3$ is the arrangement period of the miniature graphic array, which is 32 $\mu$m;
$\alpha_2$ is the inclined angle between the symmetrical axis of the second microlens array and the symmetrical axis of the miniature graphic array, which is 0° ;
$N_2$ is a coefficient, $N_2$=2;

The results are calculated as follows: $m_1$=190, $m_2$=100.
The preparation method comprises:

(1) Calculating according to the structural parameters of the first microlens and the second microlens to obtain that $d_1$=43.5 $\mu$m, $d_2$=15 $\mu$m.
(2) Preparing the second microlens layer having a pore size of 60 $\mu$m and a spherical cap height of 10 $\mu$m by a UV molding process on a 15 $\mu$m thick PET substrate, and coating a zinc sulfide coating with a thickness of 65 nm on the surface of the second microlens layer.
(3) Coating polyethylene resin on the surface of the zinc sulfide coating so that the overall thickness of the film layer reaches 43.5 $\mu$m; and then preparing the first microlens layer having a pore size of 30 $\mu$m and a spherical cap height of 6 $\mu$m on the polyethylene resin by the UV molding process.
(4) Finally preparing the miniature graphic layer on the other side of the PET substrate, by adopting the method of printing a miniature graphic as disclosed in the applicant's Chinese Patent No. 201110074244.0.

It can be seen from formulae (3) and (4) that the ratio of period of the microlens array to the miniature graphic array and the inclined angle $\alpha$ have the most direct impact on the visual effect. When $\alpha$=0, namely, the symmetrical axes of the microlens array layer and the miniature graphic array layer are parallel to each other, the system will generate a naked-eye-stereoscopic visual effect. If the ratio of period of the microlens array to the miniature graphic array is greater than 1, the visual effect is reflected as stereoscopic subsidence; and if the ratio of period of the microlens array to the miniature graphic array is less than 1, the visual effect is reflected as stereoscopic floating. When the ratio of period of the microlens to the miniature graphic is equal to 1, and $\alpha \neq 0$, the system will generate an orthogonally sloshing visual effect.
In the device of the present invention, there are three layer relationship combinations: the first microlens layer and the miniature graphic layer, the second microlens layer and the miniature graphic layer, and the first microlens layer and the second microlens layer.

In the case where the miniature graphic parameters are fixed, multiple visual effect combinations can be realized by designing different first microlens parameters and second microlens parameters.

In this Example, D1=30 $\mu$m, D2=60 $\mu$m, T1/T3=1, $\alpha_1$=0.3°, T2/T3=0.995, $\alpha_2$=0, the final effect is that the first visual effect is orthogonally sloshing, the second visual effect is stereoscopic subsidence, and a layer of faint Moire fringe will be seen from both the first visual effect and the second visual effect.

Example 2

Preparing the micro-optical device for double-sided imaging having the structures as shown in FIG. 1 and FIG. 6.

The pore size $D_1$ of the first microlens 11 is 40 $\mu$m, the spherical cap height $h_1$ is 8 $\mu$m; the pore size $D_2$ of the second microlens 21 is 80 $\mu$m, the spherical cap height $h_2$ is 12.3 $\mu$m; $\alpha_1$=0.4°, $\alpha_2$=0;

The geometry of the base of the first microlens 11 and the second microlens 21 is a circle;
The first microlens 11, the second microlens 21 and the miniature graphic are in a random arrangement;
Both the first microlens 11 and the second microlens 21 are spherical lenses.
The filling rate of the first microlens layer 1 is 68%;
The filling rate of the second microlens layer 2 is 68%;
The functional layers are a 30 nm thick zinc sulfide coating and a 40 nm thick Yttrium coating, having a refractive index of 2.35 and 1.8, respectively.

The miniature graphic layer 3 is located near the transmission focal plane of the first microlens layer 1, the distance $d_1$ between the first microlens layer 1 and the miniature graphic layer 3 and the structural parameters of the first microlens 11 satisfy the following relationship:

$$d_1 = \frac{D_1^{\,2} + 4h_1^{\,2}}{8h_1(n_1 - 1)}$$

$$(1)$$

wherein:
the parameters of the first microlens are substituted into the above formula to obtain the distance $d_1$ between the first microlens layer 1 and the miniature graphic layer, $d_1$=58 $\mu$m.

The miniature graphic layer 3 is also located near the reflection focal plane of the second microlens 21. The distance $d_2$ between the second microlens 2 and the miniature graphic layer 3 and the structural parameters of the second microlens 21 satisfy the following relationship:

$$d_2 = \frac{D_2^{\,2} - 12h_2^{\,2}}{16h_2}$$

$$(2)$$

wherein:
the parameters of the second microlens are substituted into the formula to obtain the distance $d_2$ between the second microlens layer and the miniature graphic layer, $d_2$=23 $\mu$m.

The parameters of the first microlens layer 1 and the miniature graphic layer 3 satisfy the following relationship:

$$m_2 = \frac{N_1 T_2}{\sqrt{(T_3 \cos\alpha_2 - N_1 T_2)^2 + (T_3 \sin\alpha_2)^2}} \quad (3)$$

wherein:

$T_1$ is the arrangement period of the first microlens array layer, which is 43 $\mu$m;
$T_3$ is the arrangement period of the miniature graphic array, which is 43 $\mu$m;

$\alpha_1$ is the inclined angle between the symmetrical axis of the first microlens array and the symmetrical axis of the miniature graphic array, which is 0.4° ;

$$N_1 = 1.$$

The parameters of the second microlens layer 2 and the miniature graphic layer 3 satisfy the following relationship:

$$m_2 = \frac{N_2 T_2}{\sqrt{\left(T_3 \cos\alpha_2 - N_2 T_2\right)^2 + \left(T_3 \sin\alpha_2\right)^2}}$$

$$(4)$$

wherein:

$T_2$ is the arrangement period of the second microlens array, which is 85.14 $\mu$m;
$T_3$ is the arrangement period of the miniature graphic array, which is 43 $\mu$m;
$\alpha_2$ is the inclined angle between the symmetrical axis of the second microlens array and the symmetrical axis of the miniature graphic array, which is 0°;
$N_2$ is a coefficient, $N_2=2$;

The results are calculated as follows: $m_1=143$, $m_2=100$;
The preparation method comprises:

(1) Calculating according to the structural parameters of the first microlens and the second microlens to obtain that $d_1=58$ $\mu$m, $d_2=23$ $\mu$m.
(2) Preparing the second microlens layer having a pore size of 80 $\mu$m and a spherical cap height of 12 $\mu$m by a UV molding process on a 23 $\mu$m thick PET substrate, and coating a zinc sulfide coating with a thickness of 30 nm and a Yttrium coating with a thickness of 40 nm on the surface of the second microlens layer.
(3) Coating polyethylene resin on the surface of the Yttrium coating so that the overall thickness of the film layer reaches 58 $\mu$m; and then preparing the first microlens layer having a pore size of 40 $\mu$m and a spherical cap height of 8 $\mu$m on the polyethylene resin by the UV molding process.
(4) Finally preparing the miniature graphic layer on the other side of the PET substrate, by adopting the method of printing a miniature graphic as disclosed in the applicant's Chinese Patent No. 201110074244.0.

Example 3

Preparing the micro-optical device for double-sided imaging as shown in FIG. 11.

The second microlens 21 has a pore size of $D_2=51.5$ $\mu$m, an arrangement period of $T_2=63.36$ $\mu$m and a filling rate of 60 %, the functional layer 4 has the material of hafnium oxide, a thickness of 50 nm and a refractive index of 2.0, and the other structural parameters are the same as those in Example 1. Under the above structural parameters, the information about the second visual effect cannot be directly identified and will be identified by irradiation with an additional point light source or parallel light source.

Example 4

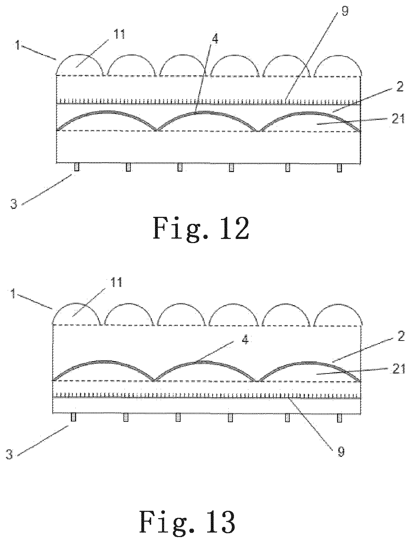

As shown in FIG. 12, this Example is a variant of Example 1, and its structure is the same as that defined in Example 1, except that a holographic information layer 9 is added between the first microlens layer and the second microlens layer. At present, the holographic technology has been very mature, and lithography holographic can produce various colorful holographic effects. Essentially, the production of theholographic effect is the interference fringe generated by incident lights of different wavelengths on the grating structures of different orientations and different parameters. The microlens array consists of many micron-scale spherical lenses, and each of the small lenses converges the light to form a highly divergent light cone. When the microlens array is directly combined with the holography, the characteristics of converging the light of the microlens will damage the propagation route of the interference fringes and make the holographic effect disappear. In the present invention, the presence of micro-arc faced functional layer is just to generate a layer of micro-arc shaped refractive index difference within the material, and the layer of refractive index difference has a very small influence on the propagation of light. The interference light generated by the holographic information layer can be observed by the human eyes through the micro-arc faced functional layer. Therefore, only the first visual effect can be seen when one observes from the side of the first microlens, and the holographic information cannot be seen, in this Example. When one observes from the side of the miniature graphic layer, both the second visual effect and the holographic information can be seen. At present, due to the popularity and popularization of the holographic technology, the simple holographic anti-counterfeiting function is more and more weak. In this Example, the holographic technology and the micro-optical technology are combined efficiently, which not only greatly improves the ornamental performance of products, but also increases the technical difficulty thereof.

The preparation method comprises:

(1) Calculating according to the structural parameters of the first microlens and the second microlens to obtain that $d_1$=43.5 $\mu$m, $d_2$=15 $\mu$m.

(2) Preparing the second microlens layer having a pore size of 60 $\mu$m and a spherical cap height of 10 $\mu$m by a UV molding process on a 15 $\mu$m thick PET substrate, and coating a zinc sulfide coating with a thickness of 65 nm on the surface of the second microlens layer.

(3) Coating polyethylene resin on the surface of the zinc sulfide coating so that the overall thickness of the film layer reaches 30 $\mu$m; then preparing a specific holographic information layer on the polyethylene resin by a thermo-molding process, conducting the surface treatment and then re-coating the polyethylene resin so that the overall thickness of the film layer reaches 43.5$\mu$m; and preparing the first microlens layer having a pore size of 30 $\mu$m and a spherical cap height of 6 $\mu$m by the UV molding process.

(4) Finally preparing the miniature graphic layer on the other side of the PET substrate, by adopting the method of printing a miniature graphic as disclosed in the applicant's Chinese Patent No. 201110074244.0.

FIG. 13 is another variant of the structure.

A holographic information layer is positioned between the second microlens layer 2 and the miniature graphic layer 3, and the same effect as FIG. 12 can be obtained.

## Claims

1.  A micro-optical device for double-sided imaging, comprising

    a first microlens layer (1), a functional layer (4), a second microlens layer (2) and a miniature graphic layer (3) which are mutually compounded in sequence;
    the first microlens layer (1) is a first microlens array formed by arranging a plurality of first microlenses (11);
    the second microlens layer (2) is a second microlens array formed by arranging a plurality of second microlenses (21);
    the functional layer (4) is arranged on the surface of the second microlens layer (2), and a material for the functional layer (4) has a refractive index different from that of a surrounding material, **characterized in that** the layer number of the functional layer (4) is two, the first functional film layer (41) is compounded on the surface of the second microlens layer (2), the second functional film layer (42) is compounded on the surface of the first functional film layer (41); the refractive index of the first functional film layer (41) is greater than that of the second functional film layer (42), the refractive index of the second functional film layer (42) is greater than that of the surrounding material, and the difference between the refractive index of the first functional film layer (41) and the refractive index of the second functional film layer (42) is 0.3 to 0.8.

2.  The micro-optical device for double-sided imaging according to claim 1, **characterized in that** the first microlens layer (1) is a first microlens array formed by arranging the first microlens (11) in a periodic arrangement or a random arrangement, and the second microlens layer (2) is a second microlens array formed by arranging the plurality of second microlens (21) in a periodic arrangement or a random arrangement.

3.  The micro-optical device for double-sided imaging according to claim 1, **characterized in that** a refractive index of the substrate of the first microlens layer (1) is 1.4 to 1.8, and a refractive index of the substrate of the second microlens layer (2) is 1.4 to 1.8.

4.  The micro-optical device for double-sided imaging according to claim 2, **characterized in that** a refractive index of the substrate of the first microlens layer (1) is 1.4 to 1.8, and a refractive index of the substrate of the second microlens layer (2) is 1.4 to 1.8.

5. The micro-optical device for double-sided imaging according to claim 1, **characterized in that** the first microlens (11) or the second microlens (21) is a spherical lens or an aspherical lens.

6. The micro-optical device for double-sided imaging according to claim 5, **characterized in that** the geometry of the base of the first microlens or the second microlens is one of circle, triangular, rectangular or regular hexagon, or a combination thereof.

7. The micro-optical device for double-sided imaging according to claim 6, **characterized in that** a ratio of the total area of the first microlens to the total area of the first microlens layer is in a range of from 40 % to 90 %, and a ratio of the total area of the second microlens to the total area of the second microlens layer is in a range of from 40 % to 90 %.

8. The micro-optical device for double-sided imaging according to claim 1, **characterized in that** the refractive index of the material for the functional layer is 1.6 to 3.5 and the difference between the refractive index of the material for the functional layer and the refractive index of the surrounding material is 0.3 to 2.0.

9. The micro-optical device for double-sided imaging according to claim 1, **characterized in that** the material for the functional layer is selected from the group consisting of an oxide, a nitride, a carbide, an inorganic metal salt, a metal or a metal alloy;

the oxide is selected from the group consisting of silicon monoxide SiO, silica $SiO_2$, titania $TiO_2$, zirconium dioxide $ZrO_2$, hafnium oxide $HfO_2$, titanium monoxide TiO, trititanium pentoxide $Ti_3O_5$, niobium pentoxide $Nb_2O_5$, tantalum pentoxide $Ta_2O_5$, yttrium oxide $Y_2O_3$ or zinc oxide ZnO;
the nitride is selected from the group consisting of titanium nitride TiN, silicon nitride $Si_3N_4$ or boron nitride BN;
the carbide is selected from the group consisting of silicon carbide SiC or boron carbide $B_4C$;
the inorganic metal salt is selected from the group consisting of neodymium fluoride $NdF_3$, barium fluoride $BaF_2$, cerium fluoride $CeF_3$, magnesium fluoride $MgF_2$, lanthanum fluoride $LaF_3$, yttrium fluoride $YF_3$, ytterbium fluoride $YbF_3$, erbium fluoride $ErF_3$, zinc selenide ZnSe, zinc sulfide ZnS, lanthanum titanate $LaTiO_3$, barium titanate $BaTiO_3$, strontium titanate $SrTiO_3$, praseodymium titanate $PrTiO_3$ or cadmium sulfide CdS;
the metal is selected from the group consisting of Al, Cu, Ti, Si, Au, Ag, In, Mg, Zn, Pt, Ge and Ni;
the metal alloy is selected from the group consisting of gold germanium alloy AuGe, gold nickel alloy AuNi, nickel chromium alloy NiCr, titanium aluminum alloy TiAl, copper indium gallium alloy CuInGa, copper indium gallium selenium alloy CuInGaSe, zinc aluminum alloy ZnAl or aluminum silicon alloy AlSi.

10. The micro-optical device for double-sided imaging according to claim 1, **characterized in that** the miniature graphic layer is a miniature graphic array arranged in a periodic arrangement or in a random arrangement.

11. The micro-optical device for double-sided imaging according to claim 10, **characterized in that** the miniature graphic layer is located near the transmission focal plane of the first microlens layer and also near the reflection focal plane of the second microlens layer.

12. The micro-optical device for double-sided imaging according to claim 11, **characterized in that** a distance $d_1$ between the first microlens layer (1) and the miniature graphic layer (3) and the structural parameters of the first microlens (11) satisfy the following relationship:

$$d_1 = \frac{D_1^{\,2} + 4h_1^{\,2}}{8h_1(n_1 - 1)}$$

$$(1)$$

wherein:

$D_1$ is a pore size of the first microlens (11);
$h_1$ is a spherical cap height of the first microlens (11);
$n_1$ is a refractive index of the material for the first microlens;

a distance $d_2$ between the second microlens layer and the miniature graphic layer (3) and the structural parameters of the second microlens satisfy the following relationship:

$$d_2 = \frac{D_2^{\,2} - 12h_2^{\,2}}{16h_2}$$

$$(2)$$

wherein:

$D_2$ is a pore size of the second microlens (21);
$h_2$ is a spherical cap height of the second microlens (21).

13. The micro-optical device for double-sided imaging according to claim 1, **characterized in that** when the first microlens array, the second microlens array and the miniature graphic layer are in the periodic arrangement, the parameters satisfy the following relationship:

$$m_1 = \frac{N_1 T_1}{\sqrt{\left(T_3 \cos\alpha_1 - N_1 T_1\right)^2 + \left(T_3 \sin\alpha_1\right)^2}}$$

$$(3)$$

wherein:

$m_1$ is a macroscopic magnification of the first visual effect, $T_1$ is the arrangement period of the first microlens array layer, $T_3$ is the arrangement period of the miniature graphic layer, $\alpha_1$ is an inclined angle between the symmetrical axis of the first microlens array and the symmetrical axis of the miniature graphic layer;
$N_1$ is a ratio coefficient, $N_1$=0.1~10;
$T_1$=20~500 $\mu$m, $T_3$=20~500 $\mu$m, $\alpha_1$=0~5° ;
the parameters of the second microlens layer and the miniature graphic layer satisfy the following relationship:

$$m_2 = \frac{N_2 T_2}{\sqrt{\left(T_3 \cos\alpha_2 - N_2 T_2\right)^2 + \left(T_3 \sin\alpha_2\right)^2}}$$

$$(4)$$

wherein:

$m_2$ is a macroscopic magnification of the second visual effect, $T_2$ is the arrangement period of the second microlens array, $T_3$ is the arrangement period of the miniature graphic layer, $\alpha_2$ is an inclined angle between the symmetrical axis of the second microlens array and the symmetrical axis of the miniature graphic layer;
$N_2$ is a ratio coefficient, $N_2$=0.1~10;
$T_2$=20~1000 $\mu$m, $T_3$ is same as defined in formula (3);

$$\alpha_2 = 0\sim5° \ .$$

14. The micro-optical device for double-sided imaging according to any of claims 1 to 7, **characterized in that** a holographic information layer (9) is provided between the first microlens layer and the second microlens layer, or provided between the second microlens layer and the miniature graphic layer.

15. The micro-optical device for double-sided imaging according to claim 1, **characterized in that** a holographic information layer (9) is provided between the first microlens layer and the second microlens layer, or provided between the second microlens layer and the miniature graphic layer.

16. A method of preparing the micro-optical device for double-sided imaging according to any of claims 1 to 15, comprising the steps of:

(1) determining the structural parameters $D_1$ and $h_1$ of the first microlens, and the structural parameters $D_2$ and $h_2$ of the second microlens to calculate the distance $d_1$ between the first microlens layer (1) and the miniature graphic layer and the distance $d_2$ between the second microlens layer and the miniature graphic layer;
(2) preparing the second microlens layer on the substrate film of the second microlens layer, the substrate film having a thickness of $d_2$, and then performing vacuum coating on the surface of the second microlens layer using the functional layer material to obtain the second microlens layer coated with said functional layer;
(3) coating the substrate layer of the first microlens layer on the other side of the functional layer;
(4) preparing the miniature graphic layer on the other side of the substrate of the second microlens layer to obtain the micro-optical device for double-sided imaging.

17. Use of the micro-optical device for double-sided imaging according to any of claims 1 to 15, **characterized in that** the device is used for preparing the security line of bills.

**Patentansprüche**

1. Mikrooptische Vorrichtung zur doppelseitigen Bildgebung, umfassend eine erste Mikrolinsenschicht (1), eine Funktionsschicht (4), eine zweite Mikrolinsenschicht (2) und eine Miniaturgrafikschicht (3), die nacheinander miteinander verbunden sind;

wobei die erste Mikrolinsenschicht (1) ein erstes Mikrolinsenarray ist, das durch Anordnen einer Vielzahl von ersten Mikrolinsen (11) gebildet ist;
die zweite Mikrolinsenschicht (2) ein zweites Mikrolinsenarray ist, das durch Anordnen einer Vielzahl von zweiten Mikrolinsen (21) gebildet ist;
die Funktionsschicht (4) auf der Oberfläche der zweiten Mikrolinsenschicht (2) angeordnet ist, und ein Material für die Funktionsschicht (4) einen Brechungsindex aufweist, der sich von dem eines umgebenden Materials unterscheidet, **dadurch gekennzeichnet, dass** die Schichtanzahl der Funktionsschicht (4) zwei ist, die erste funktionelle Filmschicht (41) auf der Oberfläche der zweiten Mikrolinsenschicht (2) verbunden ist, die zweite funktionelle Filmschicht (42) auf der Oberfläche der ersten funktionellen Filmschicht (41) verbunden ist; der Brechungsindex der ersten funktionellen Filmschicht (41) größer ist als der der zweiten funktionellen Filmschicht (42), der Brechungsindex der zweiten funktionellen Filmschicht (42) größer ist als der des umgebenden Materials, und die Differenz zwischen dem Brechungsindex der ersten funktionellen Filmschicht (41) und dem Brechungsindex der zweiten funktionellen Filmschicht (42) 0,3 bis 0,8 ist.

2. Mikrooptische Vorrichtung zur doppelseitigen Bildgebung nach Anspruch 1, **dadurch gekennzeichnet, dass** die erste Mikrolinsenschicht (1) ein erstes Mikrolinsenarray ist, das durch Anordnen der ersten Mikrolinse (11) in einer periodischen Anordnung oder einer zufälligen Anordnung gebildet ist, und die zweite Mikrolinsenschicht (2) ein zweites Mikrolinsenarray ist, das durch Anordnen der Vielzahl von zweiten Mikrolinsen (21) in einer periodischen Anordnung oder einer zufälligen Anordnung gebildet ist.

3. Mikrooptische Vorrichtung zur doppelseitigen Bildgebung nach Anspruch 1, **dadurch gekennzeichnet, dass** ein Brechungsindex des Substrats der ersten Mikrolinsenschicht (1) 1,4 bis 1,8 ist und ein Brechungsindex des Substrats der zweiten Mikrolinsenschicht (2) 1,4 bis 1,8 ist.

4. Mikrooptische Vorrichtung zur doppelseitigen Bildgebung nach Anspruch 2, **dadurch gekennzeichnet, dass** ein Brechungsindex des Substrats der ersten Mikrolinsenschicht (1) 1,4 bis 1,8 ist und ein Brechungsindex des Substrats der zweiten Mikrolinsenschicht (2) 1,4 bis 1,8 ist.

5. Mikrooptische Vorrichtung zur doppelseitigen Bildgebung nach Anspruch 1, **dadurch gekennzeichnet, dass** die erste Mikrolinse (11) oder die zweite Mikrolinse (21) eine sphärische Linse oder eine asphärische Linse ist.

6. Mikrooptische Vorrichtung zur doppelseitigen Bildgebung nach Anspruch 5, **dadurch gekennzeichnet, dass** die Geometrie der Basis der ersten Mikrolinse oder der zweiten Mikrolinse eine von kreisförmig, dreieckig, rechteckig oder einem regelmäßigen Sechseck, oder eine Kombination davon ist.

7. Mikrooptische Vorrichtung zur doppelseitigen Bildgebung nach Anspruch 6, **dadurch gekennzeichnet, dass** das Verhältnis der Gesamtfläche der ersten Mikrolinse zu der Gesamtfläche der ersten Mikrolinsenschicht in einem Bereich von 40 % bis 90 % ist und das Verhältnis der Gesamtfläche der zweiten Mikrolinse zu der Gesamtfläche der zweiten Mikrolinsenschicht in einem Bereich von 40 % bis 90 % ist.

8. Mikrooptische Vorrichtung zur doppelseitigen Bildgebung nach Anspruch 1, **dadurch gekennzeichnet, dass** der Brechungsindex des Materials für die Funktionsschicht 1,6 bis 3,5 ist und die Differenz zwischen dem Brechungsindex des Materials für die Funktionsschicht und dem Brechungsindex des umgebenden Materials 0,3 bis 2,0 ist.

9. Mikrooptische Vorrichtung zur doppelseitigen Bildgebung nach Anspruch 1, **dadurch gekennzeichnet, dass** das Material für die Funktionsschicht ausgewählt ist aus der Gruppe, bestehend aus einem Oxid, einem Nitrid, einem Carbid, einem anorganischen Metallsalz, einem Metall oder einer Metalllegierung;

das Oxid ausgewählt ist aus der Gruppe bestehend aus Siliziummonoxid SiO, Siliziumdioxid $SiO_2$, Titandioxid TiO2, Zirkoniumdioxid $ZrO_2$, Hafniumoxid HfO2, Titanmonoxid TiO, Trititanpentoxid $Ti_3O_5$, Niobpentoxid $Nb_2O_5$, Tantalpentoxid $Ta_2O_5$, Yttriumoxid $Y_2O_3$ oder Zinkoxid ZnO;
das Nitrid ausgewählt ist aus der Gruppe, bestehend aus Titannitrid TiN, Siliziumnitrid $Si_3N_4$ oder Bornitrid BN;
das Karbid ausgewählt ist aus der Gruppe, bestehend aus Siliziumkarbid SiC oder Borkarbid $B_4C$;
das anorganische Metallsalz ausgewählt ist aus der Gruppe, bestehend aus Neodymfluorid $NdF_3$, Bariumfluorid $BaF_2$, Cerfluorid $CeF_3$, Magnesiumfluorid $MgF_2$, Lanthanfluorid $LaF_3$, Yttriumfluorid $YF_3$, Ytterbiumfluorid $YbF_3$, Erbiumfluorid $ErF_3$, Zinkselenid ZnSe, Zinksulfid ZnS, Lanthantitanat $LaTiO_3$, Bariumtitanat $BaTiO_3$, Strontium-titanat $SrTiO_3$, Praseodymtitanat $PrTiO_3$ oder Cadmiumsulfid CdS; das Metall ausgewählt ist aus der Gruppe, bestehend aus Al, Cu, Ti, Si, Au, Ag, In, Mg, Zn, Pt, Ge und Ni;
die Metalllegierung ausgewählt ist aus der Gruppe, bestehend aus Gold-Germanium-Legierung AuGe, Gold-Nickel-Legierung AuNi, Nickel-Chrom-Legierung NiCr, Titan-Aluminium-Legierung TiAl, Kupfer-Indium-Gallium-Legierung CuInGa, Kupfer-Indium-Gallium-Selen-Legierung CuInGaSe, der Zink-Aluminium-Legierung ZnAl oder Aluminium-Silizium-Legierung AlSi.

10. Mikrooptische Vorrichtung zur doppelseitigen Bildgebung nach Anspruch 1, **dadurch gekennzeichnet, dass** die Miniaturgrafikschicht ein Miniaturgrafikarray ist, das in einer periodischen Anordnung oder in einer zufälligen Anordnung angeordnet ist.

11. Mikrooptische Vorrichtung zur doppelseitigen Bildgebung nach Anspruch 10, **dadurch gekennzeichnet, dass** sich die Miniaturgrafikschicht nahe der Transmissionsbrennebene der ersten Mikrolinsenschicht und auch in der Nähe der Reflexionsbrennebene der zweiten Mikrolinsenschicht befindet.

12. Mikrooptische Vorrichtung zur doppelseitigen Bildgebung nach Anspruch 11, **dadurch gekennzeichnet, dass** ein Abstand $d_1$ zwischen der ersten Mikrolinsenschicht (1) und der Miniaturgrafikschicht (3) und die Strukturparameter der ersten Mikrolinse (11) die folgende Beziehung erfüllen:

$$d_1 = \frac{D_1^2 + 4h_1^2}{8h_1(n_1 - 1)}$$

(1)

wobei:

$D_1$ eine Porengröße der ersten Mikrolinse (11) ist;
$h_1$ eine Höhe der sphärischen Kappe der ersten Mikrolinse (11) ist;
$n_1$ der Brechungsindex des Materials für die erste Mikrolinse ist;
ein Abstand $d_2$ zwischen der zweiten Mikrolinsenschicht und der Miniaturgrafikschicht (3) und die Strukturparameter der zweiten Mikrolinse die folgende Beziehung erfüllen:

$$d_2 = \frac{D_2{}^2 - 12h_2{}^2}{16h_2}$$

(2)

wobei:

$D_2$ eine Porengröße der zweiten Mikrolinse (21) ist;
$h_2$ eine Höhe der sphärischen Kappe der zweiten Mikrolinse (21) ist.

**13.** Mikrooptische Vorrichtung zur doppelseitigen Bildgebung nach Anspruch 1, **dadurch gekennzeichnet, dass**, wenn das erste Mikrolinsenarray, das zweite Mikrolinsenarray und die Miniaturgrafikschicht periodisch angeordnet sind, die Parameter die folgende Beziehung erfüllen:

$$m_1 = \frac{N_1 T_1}{\sqrt{(T_3 \cos\alpha_1 - N_1 T_1)^2 + (T_3 \sin\alpha_1)^2}}$$

(3)

wobei:

$m_1$ eine makroskopische Vergrößerung des ersten visuellen Effekts ist, $T_1$ die Anordnungsperiode der ersten Mikrolinsenarray-Schicht ist, $T_3$ die Anordnungsperiode der Miniaturgrafikschicht ist, $\alpha_1$ ein Neigungswinkel zwischen der Symmetrieachse des ersten Mikrolinsenarrays und der Symmetrieachse der Miniaturgrafikschicht ist;
$N_1$ ein Verhältniskoeffizient, $N_1 = 0,1{\sim}10$, ist;
$T_1 = 20{\sim}500\ \mu m$, $T_3 = 20{\sim}500\ \mu m$, $\alpha 1 = 0{\sim}5°$;
die Parameter der zweiten Mikrolinsenschicht und der Miniaturgrafikschicht die folgende Beziehung erfüllen:

$$m_2 = \frac{N_2 T_2}{\sqrt{(T_3 \cos\alpha_2 - N_2 T_2)^2 + (T_3 \sin\alpha_2)^2}}$$

(4)

wobei:

$m_2$ eine makroskopische Vergrößerung des zweiten visuellen Effekts ist, $T_2$ die Anordnungsperiode der zweiten Mikrolinsenarray-Schicht ist, $T_3$ die Anordnungsperiode der Miniaturgrafikschicht ist, $\alpha_2$ ein Neigungswinkel zwischen der Symmetrieachse des zweiten Mikrolinsenarrays und der Symmetrieachse der Miniaturgrafikschicht ist;
$N_2$ ein Verhältniskoeffizient, $N_2 = 0,1{\sim}10$, ist;
$T_2 = 20{\sim}1000\ \mu m$, $T_3$ wie definiert in Formel (3) ist;

$$\alpha_2 = 0{\sim}5°.$$

**14.** Mikrooptische Vorrichtung zur doppelseitigen Bildgebung nach einem der Ansprüche 1 bis 7, **dadurch gekennzeichnet, dass** zwischen der ersten Mikrolinsenschicht und der zweiten Mikrolinsenschicht oder zwischen der zweiten Mikrolinsenschicht und der Miniaturgrafikschicht eine holographische Informationsschicht (9) bereitgestellt ist.

**15.** Mikrooptische Vorrichtung zur doppelseitigen Bildgebung nach Anspruch 1, **dadurch gekennzeichnet, dass** zwischen der ersten Mikrolinsenschicht und der zweiten Mikrolinsenschicht oder zwischen der zweiten Mikrolinsenschicht und der Miniaturgrafikschicht eine holographische Informationsschicht (9) bereitgestellt ist.

**16.** Verfahren zum Herstellen der mikrooptischen Vorrichtung zur doppelseitigen Bildgebung nach einem der Ansprüche 1 bis 15, umfassend die folgenden Schritte:

(1) Bestimmen der Strukturparameter $D_1$ und $h_1$ der ersten Mikrolinse und der Strukturparameter $D_2$ und $h_2$ der zweiten Mikrolinse, um den Abstand $d_1$ zwischen der ersten Mikrolinsenschicht (1) und der Miniaturgrafikschicht und den Abstand $d_2$ zwischen der zweiten Mikrolinsenschicht und der Miniaturgrafikschicht zu berechnen;
(2) Herstellen der zweiten Mikrolinsenschicht auf dem Substratfilm der zweiten Mikrolinsenschicht, wobei der Substratfilm eine Stärke von $d_2$ aufweist, und dann Durchführen einer Vakuumbeschichtung auf der Oberfläche der zweiten Mikrolinsenschicht unter Verwendung des Materials der Funktionsschicht, um die mit der Funktionsschicht beschichtete zweite Mikrolinsenschicht zu erlangen;
(3) Beschichten der Substratschicht der ersten Mikrolinsenschicht auf die andere Seite der Funktionsschicht;
(4) Herstellen der grafischen Miniaturschicht auf der anderen Seite des Substrats der zweiten Mikrolinsenschicht, um die mikrooptische Vorrichtung für doppelseitige Bildgebung zu erlangen.

**17.** Verwendung der mikrooptischen Vorrichtung zur beidseitigen Bildgebung nach einem der Ansprüche 1 bis 15, **dadurch gekennzeichnet, dass** die Vorrichtung zum Herstellen der Sicherheitslinie von Geldscheinen verwendet wird.

**Revendications**

**1.** Dispositif micro-optique pour imagerie double face, comprenant une première couche de microlentilles (1), une couche fonctionnelle (4), une deuxième couche de microlentilles (2) et une couche graphique miniature (3) qui sont mutuellement composées en séquence ;

la première couche de microlentilles (1) est un premier réseau de microlentilles formé par agencement d'une pluralité de premières microlentilles (11) ;
la deuxième couche de microlentilles (2) est un deuxième réseau de microlentilles formé par agencement d'une pluralité de deuxièmes microlentilles (21) ;
la couche fonctionnelle (4) est disposée sur la surface de la deuxième couche de microlentilles (2), et un matériau pour la couche fonctionnelle (4) a un indice de réfraction différent de celui d'un matériau environnant, **caractérisé en ce que**
le numéro de couche de la couche fonctionnelle (4) est deux, la première couche de film fonctionnelle (41) est composée sur la surface de la deuxième couche de microlentilles (2), la deuxième couche de film fonctionnelle (42) est composée sur la surface de la première couche de film fonctionnelle (41) ; l'indice de réfraction de la première couche de film fonctionnelle (41) est supérieur à celui de la deuxième couche de film fonctionnelle (42), l'indice de réfraction de la deuxième couche de film fonctionnelle (42) est supérieur à celui du matériau environnant, et la différence entre l'indice de réfraction de la première couche de film fonctionnelle (41) et l'indice de réfraction de la deuxième couche de film fonctionnelle (42) est de 0,3 à 0,8.

**2.** Dispositif micro-optique pour imagerie double face selon la revendication 1, **caractérisé en ce que** la première couche de microlentilles (1) est un premier réseau de microlentilles formé par agencement des premières microlentilles (11) selon un agencement périodique ou un agencement aléatoire, et la deuxième couche de microlentilles (2) est un deuxième réseau de microlentilles formé par agencement de la pluralité de deuxièmes microlentilles (21) selon un agencement périodique ou un agencement aléatoire.

**3.** Dispositif micro-optique pour imagerie double face selon la revendication 1, **caractérisé en ce qu'**un indice de réfraction du substrat de la première couche de microlentilles (1) est de 1,4 à 1,8, et un indice de réfraction du substrat de la deuxième couche de microlentilles (2) est de 1,4 à 1,8.

**4.** Dispositif micro-optique pour imagerie double face selon la revendication 2, **caractérisé en ce qu'**un indice de réfraction du substrat de la première couche de microlentilles (1) est de 1,4 à 1,8, et un indice de réfraction du substrat de la deuxième couche de microlentilles (2) est de 1,4 à 1,8.

**5.** Dispositif micro-optique pour imagerie double face selon la revendication 1, **caractérisé en ce que** la première microlentille (11) ou la deuxième microlentille (21) est une lentille sphérique ou une lentille asphérique.

**6.** Dispositif micro-optique pour imagerie double face selon la revendication 5, **caractérisé en ce que** la géométrie de la base de la première microlentille ou de la deuxième microlentille est l'une parmi une géométrie circulaire, triangulaire, rectangulaire ou hexagonale régulière, ou une combinaison de celles-ci.

7. Dispositif micro-optique pour imagerie double face selon la revendication 6, **caractérisé en ce qu'**un rapport de la surface totale de la première microlentille à la surface totale de la première couche de microlentilles est compris dans une plage de 40 % à 90 %, et un rapport de la surface totale de la deuxième microlentille à la surface totale de la deuxième couche de microlentilles est dans une plage de 40 % à 90 %.

8. Dispositif micro-optique pour imagerie double face selon la revendication 1, **caractérisé en ce que** l'indice de réfraction du matériau pour la couche fonctionnelle est de 1,6 à 3,5 et la différence entre l'indice de réfraction du matériau pour la couche fonctionnelle et l'indice de réfraction du matériau environnant est de 0,3 à 2,0.

9. Dispositif micro-optique pour imagerie double face selon la revendication 1, **caractérisé en ce que** le matériau de la couche fonctionnelle est choisi dans le groupe constitué par un oxyde, un nitrure, un carbure, un sel métallique inorganique, un métal ou un alliage métallique ;

l'oxyde est choisi dans le groupe constitué par le monoxyde de silicium SiO, la silice $SiO_2$, le dioxyde de titane $TiO_2$, le dioxyde de zirconium $ZrO_2$, l'oxyde d'hafnium $HfO_2$, le monoxyde de titane TiO, le pentoxyde de trititane $Ti_3O_5$, le pentoxyde de niobium $Nb_2O_5$, le pentoxyde de tantale $Ta_2O_5$, l'oxyde d'yttrium $Y_2O_3$ ou l'oxyde de zinc ZnO ;
le nitrure est choisi dans le groupe constitué par le nitrure de titane TiN, le nitrure de silicium $Si_3N_4$ ou le nitrure de bore BN ;
le carbure est choisi dans le groupe constitué par le carbure de silicium SiC ou le carbure de bore $B_4C$ ;
le sel métallique inorganique est choisi dans le groupe constitué oar ke fluorure de néodyme $NdF_3$, le fluorure de baryum $BaF_2$, le fluorure de cérium $CeF_3$, le fluorure de magnésium $MgF_2$, le fluorure de lanthane $LaF_3$, le fluorure d'yttrium $YF_3$, le fluorure d'ytterbium $YbF_3$, le fluorure d'erbium $ErF_3$le séléniure de zinc ZnSe, le sulfure de zinc ZnS, le titanate de lanthane $LaTiO_3$, le titanate de baryum $BaTiO_3$, titanate de strontium $SrTiO_3$, le titanate de praséodyme $PrTiO_3$ ou le sulfure de cadmium CdS ;
le métal est choisi dans le groupe constitué de Al, Cu, Ti, Si, Au, Ag, In, Mg, Zn, Pt, Ge et Ni ;
l'alliage métallique est choisi dans le groupe constitué par un alliage d'or et de germanium AuGe, un alliage d'or et de nickel AuNi, un alliage de nickel et de chrome NiCr, un alliage de titane et d'aluminium TiAl, un alliage de cuivre; d'indium et de gallium CuInGa, un alliage de cuivre, d'indium, de gallium, et de sélénium CuInGaSe, un alliage de zinc et d'aluminium ZnAl ou un alliage d'aluminium et de silicium AlSi.

10. Dispositif micro-optique pour imagerie double face selon la revendication 1, **caractérisé en ce que** la couche graphique miniature est un réseau graphique miniature disposé selon un agencement périodique ou selon un agencement aléatoire.

11. Dispositif micro-optique pour imagerie double face selon la revendication 10, **caractérisé en ce que** la couche graphique miniature est située à proximité du plan focal de transmission de la première couche de microlentilles et également à proximité du plan focal de réflexion de la deuxième couche de microlentilles.

12. Dispositif micro-optique pour imagerie double face selon la revendication 11, **caractérisé en ce qu'**une distance $d_1$ entre la première couche de microlentilles (1) et la couche graphique miniature (3) et les paramètres structurels de la première microlentille (11) satisfont la relation suivante :

$$d_1 = \frac{D_1^2 + 4h_1^2}{8h_1(n_1 - 1)}$$

(1)

dans laquelle :

$D_1$ est la taille de pores de la première microlentille (11) ;
$h_1$ est une hauteur de calotte sphérique de la première microlentille (11) ;
$n_1$ est l'indice de réfraction du matériau de la première microlentille ;

une distance $d_2$ entre la deuxième couche de microlentilles et la couche graphique miniature (3) et les paramètres structurels de la deuxième microlentille satisfont la relation suivante :

$$d_2 = \frac{D_2^{\;2} - 12h_2^{\;2}}{16h_2}$$

$$(2)$$

dans laquelle :

$D_2$ est la taille de pores de la deuxième microlentille (21) ;
$h_2$ est la hauteur de la calotte sphérique de la deuxième microlentille (21).

**13.** Dispositif micro-optique pour imagerie double face selon la revendication 1, **caractérisé en ce que**, lorsque le premier réseau de microlentilles, le deuxième réseau de microlentilles et la couche graphique miniature sont dans l'agencement périodique, les paramètres satisfont la relation suivante :

$$m_1 = \frac{N_1 T_1}{\sqrt{\left(T_3 \cos\alpha_1 - N_1 T_1\right)^2 + \left(T_3 \sin\alpha_1\right)^2}}$$

$$(3)$$

dans laquelle :

$m_1$ est un grossissement macroscopique du premier effet visuel, $T_1$ est la période d'agencement de la première couche de réseau de microlentilles, $T_3$ est la période d'agencement de la couche graphique miniature, $\alpha_1$ est un angle incliné entre l'axe de symétrie du premier réseau de microlentilles et l'axe de symétrie de la couche graphique miniature ;
$N_1$ est un coefficient de rapport, $N_1 = 0,1$ à 10;
$T_1 = 20$ à 500 $\mu$m, $T_3 = 20$ à 500 $\mu$m, $\alpha_1 = 0$ à 5° ;
les paramètres de la deuxième couche de microlentilles et de la couche graphique miniature satisfont la relation suivante :

$$m_2 = \frac{N_2 T_2}{\sqrt{\left(T_3 \cos\alpha_2 - N_2 T_2\right)^2 + \left(T_3 \sin\alpha_2\right)^2}}$$

$$(4)$$

dans laquelle :

$m_2$ est un grossissement macroscopique du deuxième effet visuel, $T_2$ est la période d'agencement du deuxième réseau de microlentilles, $T_3$ est la période d'agencement de la couche graphique miniature, $\alpha_2$ est un angle incliné entre l'axe de symétrie du deuxième réseau de microlentilles et l'axe de symétrie de la couche graphique miniature ;
$N_2$ est un coefficient de rapport, $N_2 = 0,1$ à 10 ;
$T_2 = 20$ à 1000 $\mu$m, $T_3$ est tel que défini dans la formule (3) ;

$$\alpha_2 = 0 \text{ à } 5°.$$

**14.** Dispositif micro-optique pour imagerie double face selon l'une quelconque des revendications 1 à 7, **caractérisé en ce qu'**une couche d'informations holographiques (9) est disposée entre la première couche de microlentilles et la deuxième couche de microlentilles, ou disposée entre la deuxième couche de microlentilles et la couche graphique miniature.

**15.** Dispositif micro-optique pour imagerie double face selon la revendication 1, **caractérisé en ce qu'**une couche d'informations holographiques (9) est disposée entre la première couche de microlentilles et la deuxième couche de microlentilles, ou disposée entre la deuxième couche de microlentilles et la couche graphique miniature.

**16.** Procédé de préparation du dispositif micro-optique pour imagerie double face selon l'une quelconque des revendications 1 à 15 comprenant les étapes de :

(1) détermination des paramètres structurels $D_1$ et $h_1$ de la première microlentille et des paramètres structurels $D_2$ et $h_2$ de la deuxième microlentille pour calculer la distance $d_1$ entre la première couche de microlentilles (1) et la couche graphique miniature et la distance $d_2$ entre la deuxième couche de microlentilles et la couche graphique miniature ;
(2) préparation de la deuxième couche de microlentilles sur le film de substrat de la deuxième couche de microlentilles, le film de substrat ayant une épaisseur $d_2$, puis réalisation d'un revêtement sous vide sur la surface de la deuxième couche de microlentilles au moyen du matériau de couche fonctionnelle pour obtenir la deuxième couche de microlentilles revêtue de ladite couche fonctionnelle ;
(3) revêtement de la couche de substrat de la première couche de microlentilles de l'autre côté de la couche fonctionnelle ;
(4) préparation de la couche graphique miniature de l'autre côté du substrat de la deuxième couche de microlentilles pour obtenir le dispositif micro-optique pour l'imagerie double face.

**17.** Utilisation du dispositif micro-optique pour l'imagerie double face selon l'une quelconque des revendications 1 à 15, **caractérisée en ce que** le dispositif est utilisé pour préparer la ligne de sécurité de billets.

Fig. 1

Fig. 2

Fig. 3

Fig. 4a                    Fig. 4b

Fig. 4

Fig. 5

Fig. 6

Fig. 7

a          b

Fig. 8

Fig. 9

Fig. 10

Fig. 11

Fig. 12

Fig. 13

**REFERENCES CITED IN THE DESCRIPTION**

**Patent documents cited in the description**

- US 5712731 A
- US 20050180020 A1, R. A. Steenblik
- US 2012098249 A1

- CN 201110074244

**Non-patent literature cited in the description**

- **C. Y. CHANG** ; **S. Y. YANG** ; **M. H. CHU**. Rapid fabrication of ultraviolet-cured polymer microlens arrays by soft roller stamping process. *Micromech. Microeng.*, 2007, vol. 84, 355-361